# EUROPEAN PATENT APPLICATION

(11) **EP 4 129 127 A1**
(43) Date of publication of application: **08.02.2023**
(21) Application number: 21726224.5
(22) Date of filing: 23.03.2021
(51) Int. Cl.: A47J 31/52, A47J 31/44

(54) **SYSTEMS AND PROCESSES FOR PREPARATION OF EDIBLE PRODUCTS WITH TOUCHLESS INTERACTION**

(30) Priority: 24.03.2020 PT 2020116184
(71) Applicant: Novadelta-Comércio e Industria de Cafés, Lda., 1950-041 Lisboa (PT)
(72) Inventor: NABEIRO, Rui Miguel, 7370-112 CAMPO MAIOR (PT); DE FIGUEIREDO BRANCO, João André, 1885-091 MOSCAVIDE (PT); MEDINA MUNDT, Jesús, 1800-098 LISBOA (PT)
(74) Representative: Ferreira Pinto, Francisca
(86) International application number: PCT/PT2021/050008
(87) International publication number: WO 2021/194364

(57) **Abstract**

The present invention discloses systems and processes for preparation of edible products, for example aromatic beverages such as espresso coffee and similar, based upon portions (7) of edible substance, for example coffee in a capsule, including an apparatus (1) that comprises a recipient placement disposition (2) adapted for placing a recipient (10, 10') for collecting edible product, an envelope (3) of apparatus and an access disposition (4) that provides selective access to at least one of said recipient placement disposition (2) and an entry passageway (8) of portions, whereby the cycle of beverage preparation can be carried out by means of apprehension of at least one type of touchless input gesture in the proximal surrounding of the apparatus (1), preferentially in the proximal surrounding of said access disposition (4).

## Description

### Field of the invention

The present invention refers to systems and processes for preparing edible products, in particular including apparatuses for preparing aromatic beverages by means of the extraction of a respective edible substance, said apparatuses including beverage discharge means to the interior of a drinking recipient, in particular discharge in a direction opposite to the direction of the force of gravity.

### Background of the invention

The prior art presents several solutions of beverage discharge in beverage preparation machines. In particular in the case of aromatic beverages such as for example espresso-type coffee, the beverage discharge is a relevant process with potential impact in the quality of the beverage obtained in the drinking recipient. In fact, in particular in the case of espresso-type coffee, the main characteristics of the discharge flow determine several aspects such as the cream production and retention thereof inside a cup, and the temperature variation as a result of air exposure during the discharge to the cup.

The document DE 2009 048233 A1 discloses a system of the type of the present invention whereby portions of edible substance are provided to a collection space by means of raising a lid-like disposition that comprises the beverage discharge means. This solution presents constructive complexity and ergonomic constrains. Moreover, said lid-like disposition does not provide selective access to the beverage discharge means.

The document WO 2014/086915 A1 discloses a similar system whereby there seems to be an opening for introducing a portion of edible substance, and a beverage discharge provided at a similar height. However, the document does not disclose a compact and ergonomic disposition of said elements.

The document WO 2017/200409 A1 also registered by the author of the present application, discloses a system for preparing aromatic beverages with an enhanced beverage discharge disposition, and also presenting advantageous configurations of the apparatus.

Moreover, systems are generally known whereby the actuation of an access disposition, for example for inserting a capsule containing edible substance, requires a completely free hand for this purpose. It is therefore difficult for a user to operate an apparatus of the type of the present invention if she has both hands substantially occupied. For example, in case that she holds a drinking recipient with one hand and a mobile communication device with the other.

There is therefore the need for solutions that provide better ergonomics of actuation of the access dispositions in this type of apparatuses, in particular selective access to the passageway for introducing portions of edible substance, and to the support of placement of drinking recipient, if that is the case.

### General description of the invention

The objective of the present invention is to provide a process for preparing edible products, for example of the espresso coffee type, based upon portions of edible substance, for example coffee in capsules or pods, in particular using an apparatus and a recipient that can be placed on a recipient placement disposition of said apparatus so that it is operatively associated with a discharge of edible product, said apparatus being adapted so as to provide actuation of at least said access disposition by means of reliable actuation interfaces, requiring certain types of input gestures, and that thereby do not require any contact by the user with the apparatus in a cycle of preparation of edible product.

This objective is solved according to the present invention by means of a process for preparing edible products according to claims 1.

In particular, the aforementioned objective is solved by means of a process whereby at least one step of the cycle of preparing the edible product, including the actuation into movement of at least one component of said apparatus, can be triggered after the detection by input means associated with the apparatus of a touchless input gesture made by the user in the proximal surrounding of said apparatus, in particular in an input space generated by the input means, so that said cycle of preparation of edible product can be carried without the user having to touch the apparatus.

According to another inventive aspect, said input gesture includes at least one of: a touchless free hand gesture, a touchless hand gesture holding a recipient, a gesture of placing a recipient on a respective recipient placement disposition, a gesture of handling the recipient on said recipient placement disposition, a gesture of placing a portion of edible substance, a gesture of handling the portion of edible substance in the proximity of an entry passageway of portions.

The process according to the present invention can be carried out by means of operating a system that comprises:
- An apparatus presenting: a product preparation device adapted for receiving said portions of edible substance and in fluid connection upstream of a product discharge; optionally an envelope of apparatus and an access disposition adapted so that can be moved, for example by electromechanically, and thereby provide access to at least one of: a recipient placement disposition, optionally an entry passageway of portions; control means and input means operatively associated with the access disposition;
- at least one type of drinking recipient adapted so that can be operatively placed on the recipient placement disposition.

The process further comprises the step of providing the apparatus in operative condition.

The present invention further refers to a system adapted for carrying out a process of the type of the present invention, in particular a system that provides carrying out a cycle of preparing an edible product without requiring more than two, preferentially more than one initial input gesture without requiring the user to touch the apparatus.

This objective is solved according to the present invention by means of a system for preparing edible products according to claim 11.

In particular, according to a first aspect, the objective is solved by means of a system comprising an apparatus that presents an access disposition that provides selective access at least to said recipient placement disposition, in particular so that can selectively cover at least one of: the recipient placement disposition and product discharge associated herewith, and an entry passageway of portions, based upon the apprehension of a touchless input gesture made in the proximal surrounding of the apparatus, in particular of said access disposition, so that a cycle of preparing the edible product can be carried out without requiring the user to touch the apparatus.

According to another aspect, the apparatus presents input means adapted so that can apprehend and discriminate at least one of, preferentially different type of input gestures, including at least one of: a free hand gesture without touching, a hand gesture holding a recipient without touching, a gesture of placing a recipient upon a respective recipient placement disposition, a gesture of handling a recipient on said recipient placement disposition.

According to another aspect, the apparatus presents input means adapted so that can apprehend and discriminate different types of objects, in particular different types of portions of edible substance and recipients, in a proximity surrounding and/or placed in respective operation means of the apparatus, preferentially includes the relative position of a mark of these objects with relation to a reference.

Said input means can be adapted so that can apprehend at least one of: an optical interaction, an electromagnetic interaction, including an interaction by infrared, a magnetic interaction and a mechanical force interaction, preferentially smaller or equal to the weight of the interacting object, occurring in at least one of: tri-dimensional input space in the proximal surroundings of the apparatus, and input surface in the exterior envelope of the apparatus.

In the scope of the present invention, the expression "input space", is understood as a spatial envelope that extends externally next to the apparatus and in a distance of up to 0,5 m, preferential up to 0,3 m from the exterior envelope of the apparatus, at least including in the orthogonal projection of at least part of the area defined or confined by input means, or at least in the portion of surrounding space on sight from said input means.

The apparatus can present control means adapted so that can control a beverage preparation cycle based upon and according with input data apprehended by said input means in a respective proximal surrounding and associated with an object that is not part of said apparatus, including data relating to the position of said drinking recipient and of said portion of edible substance with relation to parts of said apparatus.

The apparatus can present a recipient placement disposition adapted so that provides support for placement of at least one type of drinking recipient for collection of said edible product, in particular in operative manner so that said so that can be retained on the recipient placement disposition and that the edible product can be discharged along a direction opposite to the one of the gravity force.

The apparatus can present a discharge of edible product associated with said recipient placement discharge and adapted so as to inject said edible product, for example beverage, along the direction contrary to the direction of the gravity force.

The apparatus can present a recipient placement disposition and an entry passageway of portions at least approximately on a same envelope surface of said apparatus that extends along a single plane, preferentially on an envelope surface of the top part of said apparatus. It is preferred when said top part of the apparatus only presents said recipient placement disposition and said entry passageway of portions of edible substance, whereby the access disposition is provided so that can selectively cover both relative to the exterior of the apparatus.

### Description of the Figures

The invention shall be hereinafter explained in greater detail based upon preferred embodiments and the attached Figures.

The Figures show, in simplified schematic representations:
- Figure 1:: side (on the left-hand side) and frontal views of an apparatus (1) for preparing beverages in a system of the type of the present invention, according to prior art;
- Figure 2:: diagram of a drinking recipient (1) operatively placed on a recipient placement disposition (2) operatively associated in fluid connection to an apparatus (3), according to the prior art;
- Figure 3:: diagram of a first preferred embodiment of process according to the present invention;
- Figure 4:: frontal and top views (on the right-hand side) of a first embodiment of a system according to the present invention, with the access disposition (4) in a closed condition (I) and a touchless input gesture;
- Figure 5:: top views according to Figure 4, representing other preferred embodiments of touchless input gesture;
- Figure 6:: views corresponding to those of Figure 4, with the access disposition (4) in an open position (II);
- Figure 7:: diagram of a second preferred embodiment of process according to the present invention;
- Figure 8:: views corresponding to those of Figure 4, with the access disposition (4) in a closed position (I);
- Figure 9:: views corresponding to those of Figure 8, with the access disposition (4) in an intercalary partially open position, progressing towards the open position (II);
- Figure 10:: views corresponding to those of Figure 8, with the access disposition (4) in an open position (II);
- Figure 11:: side views of an embodiment of a system according to the present invention, and
- Figure 12:: representing two distinct moments of actuation of the access disposition (4) of the apparatus (1); side views according to Figure 11, two other actuation moments of the access disposition (4) of the apparatus (1);
- Figure 13:: diagram of another embodiment of process according to the present invention;
- Figure 14:: diagram of continuation of the embodiment of process according to Figure 13;
- Figure 15:: frontal and top views (on the right-hand side) of another embodiment of a system according to the present invention, and with the access disposition (41, 42) in a closed condition;
- Figure 16:: top views of two successive actuation moments of the embodiment according to Figure 15;
- Figure 17:: diagram of another embodiment of process according to the present invention;
- Figure 18:: views according to Figure 15, and with one part of the access disposition (41, 42) in an open condition;
- Figure 19:: top views of two successive actuation moments of the embodiment according to Figure 15;
- Figure 20:: diagram of another embodiment of process according to the present invention;
- Figure 21:: side and frontal views (on the right-hand side) of another preferred embodiment of a system according to the invention, with the access disposition (4) in a closed position (I) ;
- Figure 22:: side and frontal views (on the right-hand side) of another preferred embodiment of a system according to the invention, with the access disposition (4) in an open position (II) .

### Detailed description of the invention

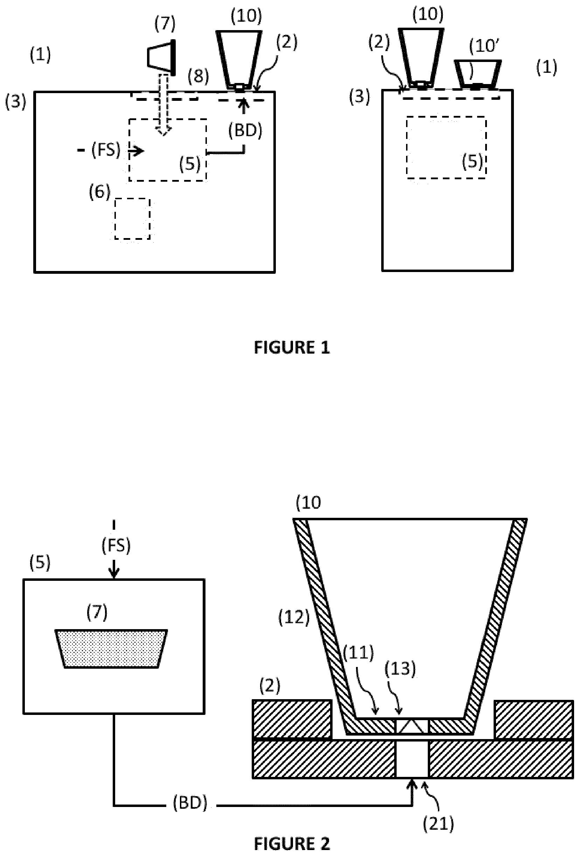

**Figures 1** and **2** represent a first type of system according to the present invention.

**Figure 1** represents side views (on the left-hand side of the drawing) and frontal views of an apparatus (1) for preparing beverages in a system of the type according to the present invention, including drinking recipients (10, 10') operatively placed on a recipient placement disposition (2) of said apparatus (1), whereas **Figure 2** represents a functional diagram of discharge of edible product (BD) in a system of the type of the present invention.

As represented, said apparatus (1) presents a product preparation device (5), in this case provided inside of the apparatus casing (3) of said apparatus (1) and comprising two parts at least one of which can be moved between closed and open position, so that the product preparation device (5) can collect a portion (7) of edible substance that is precursor of a beverage, for example contained inside of a capsule, and introduced through an entry passageway (8) of portions.

Moreover, said apparatus (1) can include a fluid reservoir (not represented), as well as a flow pressurization device and a fluid heating device (not represented), so that can supply a flow (FS) at a temperature comprised between 60 and 100 °C and at a pressure comprised between 1 and 20 bar, so as to interact with said edible substance. The apparatus (1) further comprises control means (6) adapted so that can control each beverage preparation cycle. The expert in the field knows these means such that one herewith abdicates from a more detailed representation or description thereof.

A beverage flow discharge (BD) is conducted from an exit of said product preparation device (5) to a recipient placement disposition (2) that includes a product discharge (21) so that the beverage discharge to the interior of the drinking recipient (10, 10') unfolds through the base portion (11) thereof.

In the case of this type of system, the drinking recipient (10, 10') presents flow regulation means (13) arranged on a base portion (11) thereof and adapted so that only enable flow entry in the drinking recipient (10, 10') if the flow pressure is greater than a previously defined flow pressure.

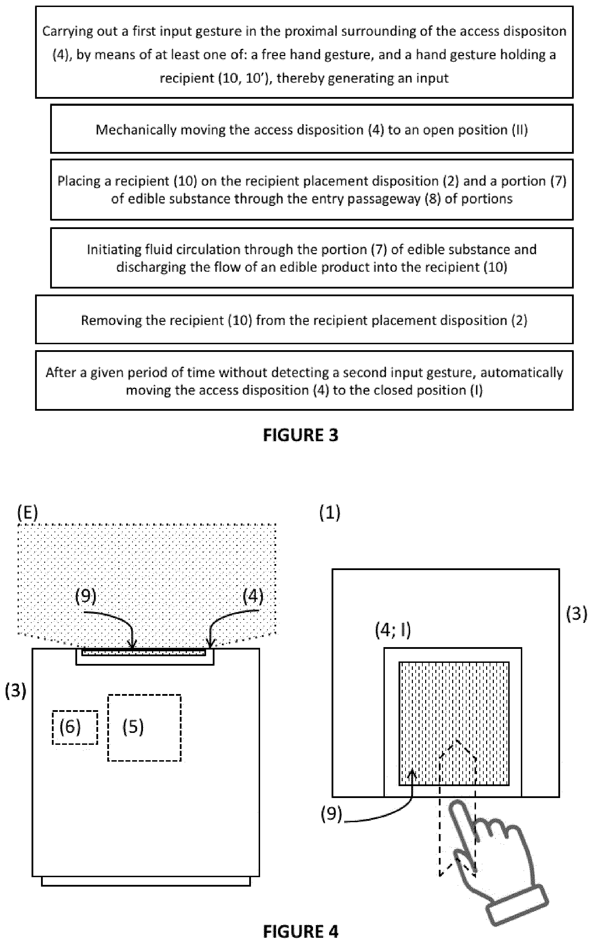

**Figure 3** represents an embodiment of process according to the present invention, which is additionally illustrated in the drawings of **Figures 4** to **6****.**

As represented, the apparatus (1) presents an envelope (3) of apparatus and an access disposition (4) that provides selective access to the recipient placement disposition (2) and product discharge (21), so that prevents the possibility of accumulation of dust and other residues as result from exposure to ambient air at a given location of use of the apparatus (1).

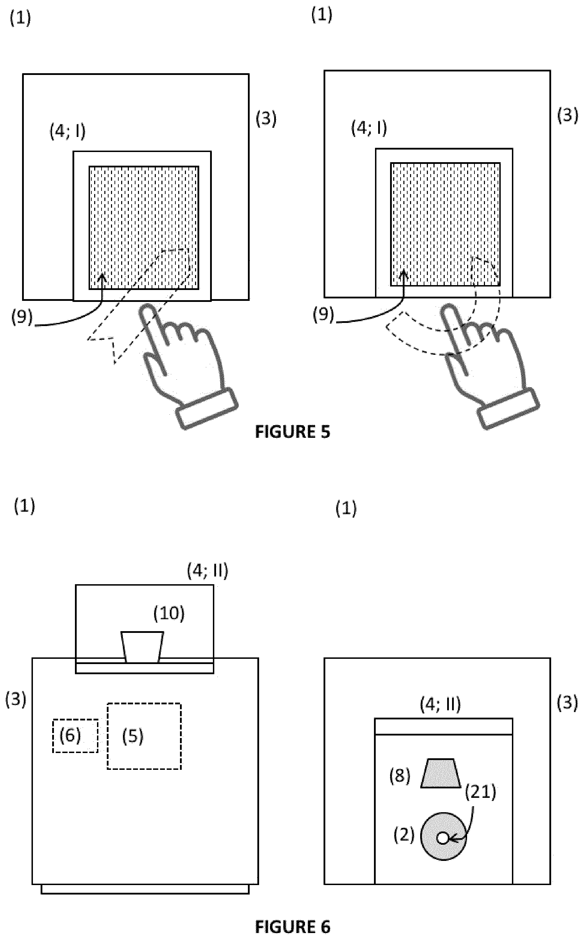

The access disposition (4) can be actuated, for example by mechanical actuation means, in a rotation movement between a closed position - Figure 4 - and an open position (II) - Figure 6 - where provides access to the recipient placement disposition (2), product discharge (21) and entry passageway (8) of portions for the introduction of a portion (7) of edible substance - here not represented.

The access disposition (4; 41, 42) can be adapted so that can provide selective access at least to the product discharge (21) and recipient placement disposition (2), whereby the access disposition (4) can completely confine the space defined by the recipient placement disposition (2) and product discharge (21) relative to the exterior of the apparatus (1) in case the access disposition (4) is at a closed position (I).

The access disposition (4; 41, 42) can be adapted so that provides selective access and confine an entry passageway (8) of portions relative to the exterior, adapted for introduction of portions (7) of edible substance and disposed on a plane and level similar or different from the plane where the recipient placement disposition (2) is disposed.

The access disposition (4; 41, 42) can be adapted, in particular operatively associated with the envelope (3) of apparatus, so that can be moved between:
- the closed position (I), where confines at least one of: the recipient placement disposition (2) including the product discharge (21) at least in case that the recipient (10, 10') is not placed thereupon, and the entry passageway (8) of portions, relative to the exterior of the apparatus (1), and
- at least one open position (II) where provides access to at least one of: the recipient placement disposition (2) for placement of the recipient (10, 10') thereupon, in particular operative placement in relation to the product discharge (21), and the entry passageway (8) of portions, for supply of a portion (7) of edible substance to the product preparation device (5).

The access disposition (4; 41, 42) can be adapted so that can provide selective access separately to the recipient placement disposition (2), including product discharge (21), and to the entry passageway (8) of portions, whereby the actuation mechanism of the first and second access parts (41, 42) is preferentially at least one of: similar and common.

The access disposition (4) can present a first and a second access parts (41, 42), whereby a first access part (41) confines and provides access at least to the recipient placement disposition (2), including product discharge (21), and a second access part (42) provides selective access to the entry passageway (8).

The first and second access parts (41, 42) can be adapted so that the opening of at least one them is only provided in can of an indication of operative opening of the other, for example the opening of the second access part (42) to the entry passageway (8) of portion is only provided in case that the recipient (10, 10') is operatively placed on the recipient placement disposition (2).

The access disposition (4; 41, 42) can be provided so that can be actuated in manual and/or non-manual manner in at least one of the movements between closed (I) and open position (II), whereby the access disposition (4; 41 42) can be preferentially retained in removable manner on the closed position (I).

The access disposition (4; 41, 42) can be adapted so that can be actuated in non-manual manner between a closed (I) and an open position (II) thereof, and vice-versa, whereby said actuation corresponds to at least one of: a rotation movement and a translation movement of at least part of the access disposition (4; 41, 42), whereby at least part of said movement is carried out in at least one of: a different plane and a plane at least approximately parallel to the plane along which extend the recipient placement disposition (2) and entry passageway (8) of portions, and whereby said movement further corresponds to at least one of: to the movement of a single access part (4), to the movement of a first access part (41) and of at least a second access part (42), preferentially in coordinated manner with each other, to the articulated movement of a plurality of access parts, for example in a diaphragm-like disposition.

The recipient placement disposition (2) can be adapted so that can be actuated in non-manual manner between a closed (I) and an open position (II), thereby enabling placement of a recipient (10) on a placement surface thereof, and vice-versa, thereby retaining the recipient (10) on the placement surface.

The access disposition (4; 41, 42) is provided with a general shape of type lid, hood, or similar, door, window, or similar, for example of planar type, and as a single piece or as a plurality of pieces.

The access disposition (4) is adapted as at least one of:
- does not extend completely above, preferentially extends completely laterally surrounded by the envelope (3) of apparatus when in a closed position (I),
- extends completely above of the envelope (3) of apparatus when in a closed position (I);
- extends in at least most part, preferentially in all the top region of the apparatus (1).

The access disposition (4; 41, 42) may not present any cavity, projection or opening.

The access disposition (4) can be provided in at least one of: top region and frontal region of the envelope (3) of apparatus.

The access disposition (4; 41, 42) can be adapted so that confines at least one of the recipient placement disposition (2) and entry passageway (8) of portions relative to the exterior in the case that at least part thereof is on the closed position (I), and provides at least one of placement of the drinking recipient (10, 10') on the recipient placement disposition (2) and introduction of portion (7) of edible substance through the entry passageway (8), in the case that at least part is on an open position (II).

The apparatus (1) can be provided so that can prepare a beverage, for example an aromatic beverage, based upon portions (7) of edible substance, for example in capsules.

The apparatus (1) can present a product preparation device (5) provided in flow connection downstream of a flow pressurization device, and a respective entry passageway (8) of portions adapted for introduction of portions (7) of edible substances, supply of the portion (7) of edible substance to the product preparation device (5).

According to an inventive aspect, the apparatus (1) further presents input means (9) operatively associated with the access disposition (4) and adapted so that can apprehend a contactless input generated on the proximal surrounding of the access disposition (4), in particular a tri-dimensional input space (E) associated with said input means (9). Said contactless input can be a gesture by a free hand, or a gesture of a hand holding a recipient (10), in particular a gesture of approaching a recipient (10) towards the access disposition (4), optionally further the presence during a previously defined period of time in the proximity of the access disposition (4).

Said input means (9) can be provided as elements oriented to the exterior and extending so as to maximize the surrounding geometric space, in particular in the frontal and top region of the apparatus (1), and be arranged in visible manner, whereby it is preferred when they are provided so that they do not result visible or perceptible by a user.

In a process according to the invention, a user makes a gesture, for example free hand, or holding a recipient (10) in the proximity of the access disposition (4), thereby generating an input that can be apprehended by input means (9), for example of the infrared type. Said input triggers the actuation of the opening movement of the access disposition (4), thereby providing access to the recipient placement disposition (2) and entry passageway (8) of portions. The user places the recipient (10) and introduces a portion (7) of edible substance, thereby generating respective inputs. According to these inputs, the control means (6) automatically trigger the start of the fluid circulation, so that the product is discharged into the recipient (10). The user then removes the recipient (10) after which the access disposition (4) can be automatically moved back to the closed position (I).

Different types of free hand gestures without touching on the access disposition (4) can be defined, such as for example those represented in Figures 4 and 5. Said input means (9) can be adapted so that can apprehend and discriminate at least two different gestures.

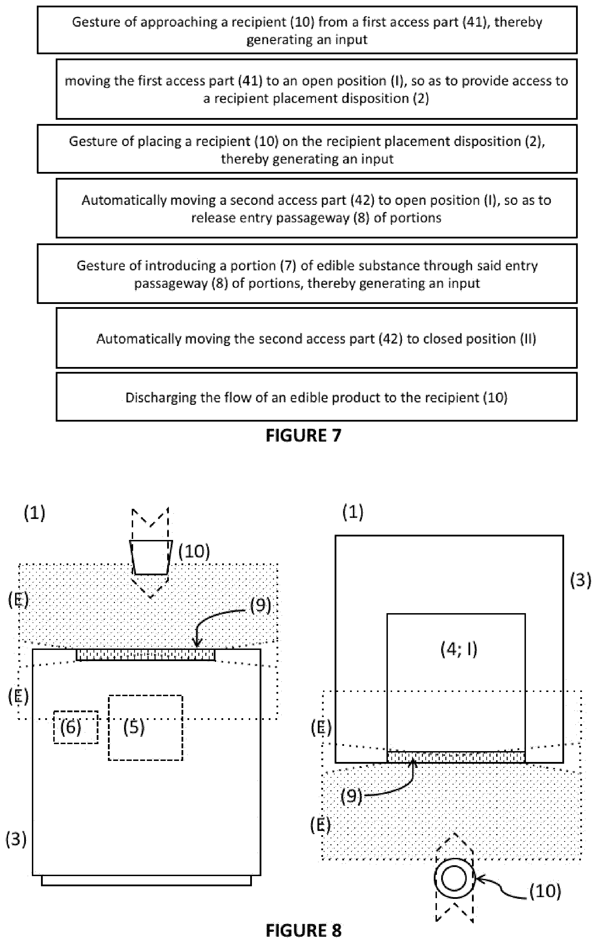

**Figure** 7 represents another embodiment of process according to the present invention, which is additionally illustrated in the drawings of **Figures** 8 to **10****.**

A user makes a gesture of approaching a recipient (10) from the access disposition (41), in the input space (E) associated with the input means (91), so that there is detected the presence of said recipient, for example by detection of a particular characteristic, including of the shape, dimension, code or of a magnetic or reflecting material, associated with said recipient (10), and triggering the opening movement thereof. The input space (E) extends at least in the top and frontal regions, preferentially in an extension of up to 50 cm, preferentially of up to 30 cm above of at least one frontal portion of the access disposition (4).

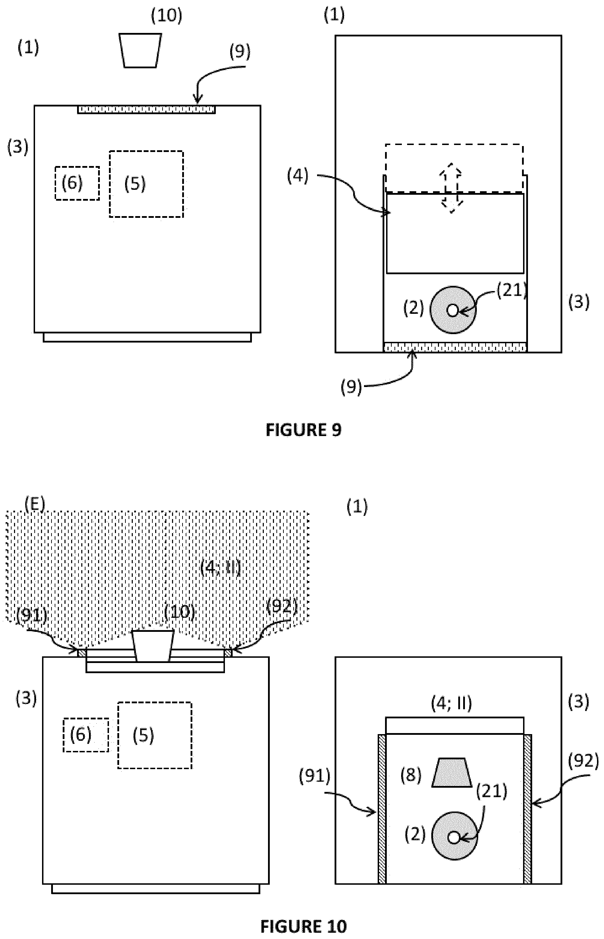

As represented, said access disposition (4) occupies a first intercalary position between the closed (I) and open positions (II) - vide **Figure 9** -, for example corresponding to a semi-open position where only provides access to the product discharge (21), but not to the entry passageway (8) of portions. The user places the recipient (10) in operative condition upon the product discharge (21) thereby generating an input that triggers the continuation of the opening movement, so as to provide access to the entry passageway (8) of portions.

The user introduces the portion (7) of edible substance, so that an input is herewith generated. Said portion (7) can be advantageously detected in the path of access to the product preparation device (5). Moreover, a particular characteristic of said portion (7) of edible substance can be detected, for example a code, so as to define product preparation parameters, for example at least one of fluid circulation temperature and pressure.

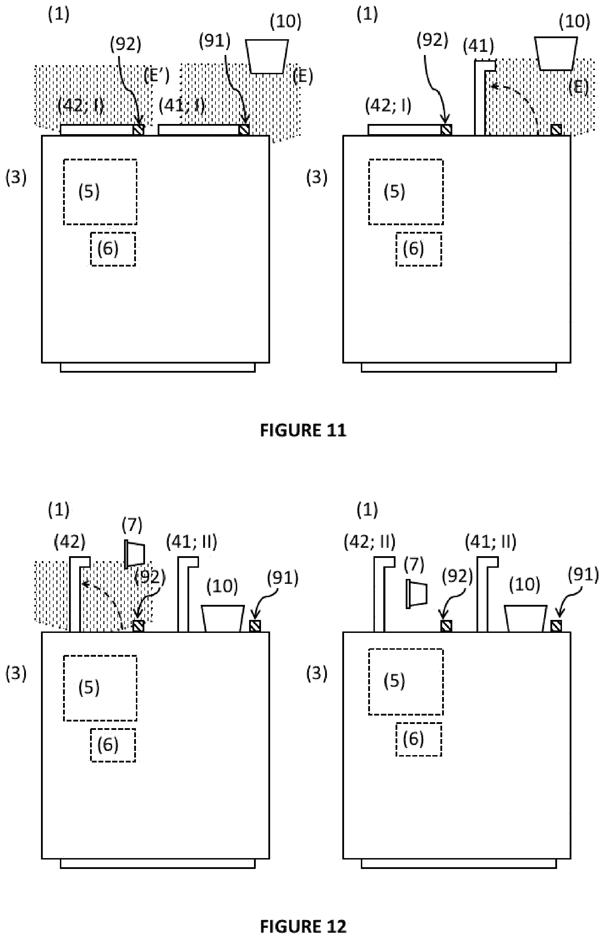

**Figures 11** and **12** represent successive moments in a cycle for preparing a product in an apparatus (1) whereby the access disposition (4) presents access parts (41, 42) that can be separately actuated, in a rotation movement around an axis, thereby providing access to the recipient placement disposition (2) and product discharge (21) in the case of a first access part (41), and to the entry passageway (8) of portions in the case of a second access part (42).

Each one of said access parts (41, 42) can present respective input means (91, 92) to which respective input spaces (E, E') are associated, whereby a first one can be adapted so that can detect the proximity of a recipient (10), including by detection thereof and/or of a particular characteristic associated therewith, and a second for detecting the proximity of a portion (7) of edible substance, including by detection thereof and/or of a particular characteristic associated therewith. Said input spaces (E, E') can be actuated in different moments and during different periods of time, for example the second input space (E') can only be actuated after and in case of detection of a recipient (10) placed in operative condition.

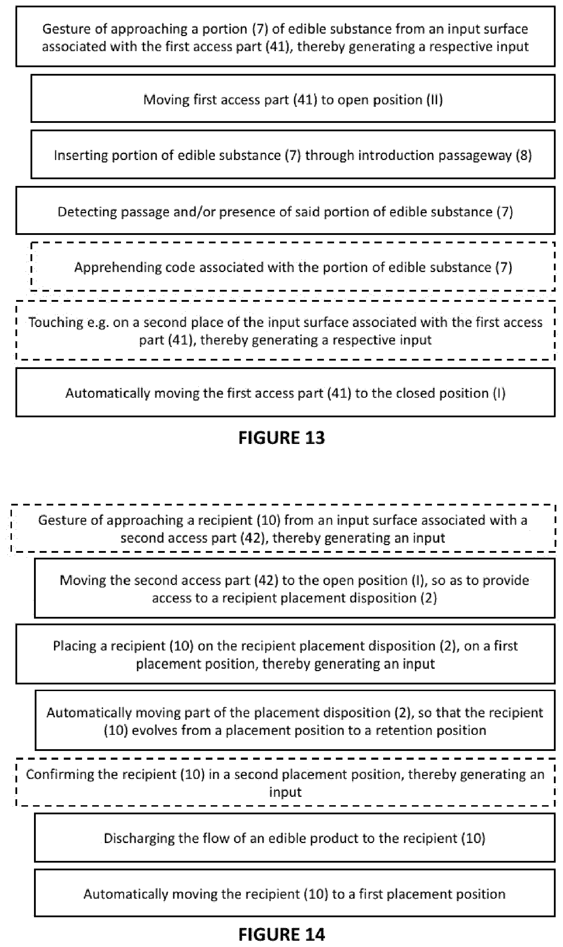

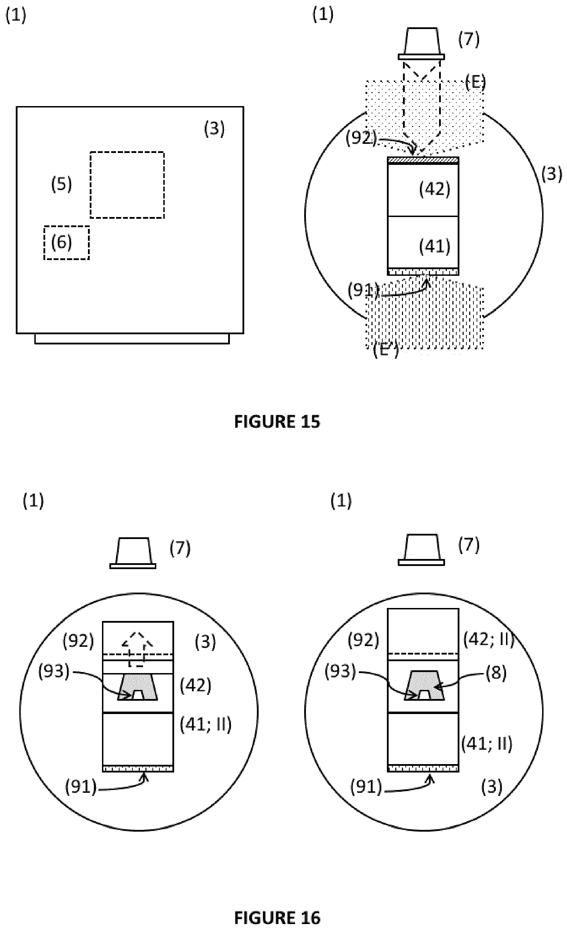

An embodiment of a respective cycle of preparing a product is reproduced in **Figures 13** and **14****,** whereby **Figures 15** and **16** represent views of successive moments.

It is preferred when only the actuation of one of said access parts (41, 42) requires an input gesture, whereby the actuation of the second requires the verification of a previously defined condition associated with the first access part (41).

The user can approach a recipient (10) of the first access part (41) so that generates an input apprehended by the input means (9) that triggers the actuation of the first access part to an open position, so as to provide access to a recipient placement disposition (2).

It is preferred when the recipient (10) is provided with means, for example of the magnetic type, adapted so that can generate a contactless interaction, in a proximity surrounding of the input means (9).

The user then places the recipient (10) on the recipient placement disposition (2), whereby a apprehension of the presence of the recipient (10) thereon automatically triggers the actuation of a second access part (42) so as to release the entry passageway (8) of portions. The apprehension of the entry of portion (7) of edible substance through the entry passageway (8) of portion and/or of its presence in a product preparation device (5), automatically triggers the reverse closing movement of said second access part (42). Moreover, the control means (6) can be adapted so that, once concluded the closing movement of the second access part (42), the process of preparation and discharge of flow of edible product can be started automatically.

It is herewith provided an advantageous interaction with the apparatus (1) that requires the minimum of input gestures and operations by the user.

In particular, the user does not need to push any button, nor to actuate any lever.

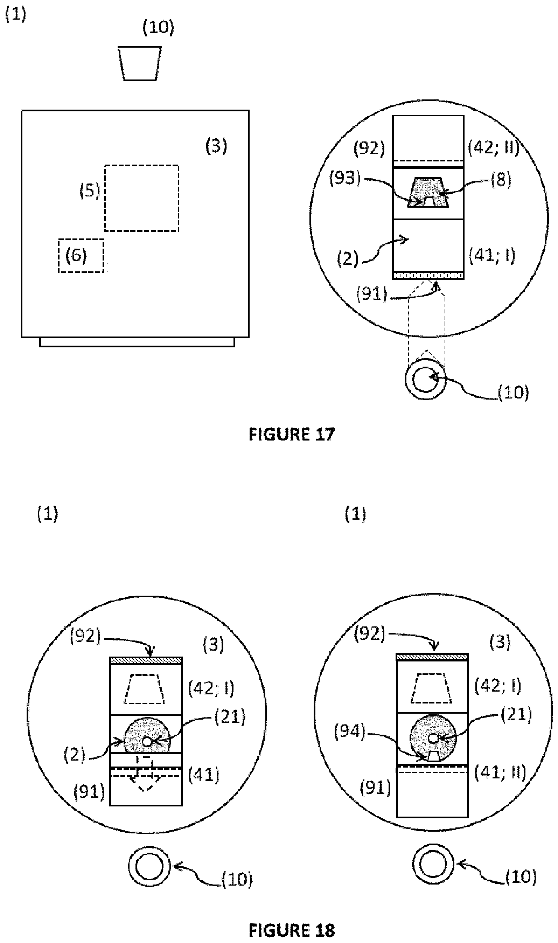

**Figures 17** and **18** represent alternative embodiments of systems and processes according to the present invention.

Said input means (91, 92) can be adapted, for example as optical, magnetic or infrared detection devices, to apprehend a gesture and an object, for example a portion (7) of edible substance and/or a recipient (10, 10'), when in a proximal surrounding of the apparatus (1), whereby there is apprehended at least one: characteristics of the trajectory described by the gesture and object, relative distance to the input means (9; 91, 92) and period of presence of the object on said input space (E, E').

Moreover, there are further provided third input means (93) adapted so that can apprehend the interaction of a portion (7) of edible substance with at least one of: entry passageway (8) of portions and product preparation device (5), and fourth input means (94) adapted so as to apprehend the placement of a recipient (10).

The user can start by interacting with the second access part (42) so that can introduce a portion (7) of edible substance.

The conclusion of the closing movement of said first access part (41) can automatically trigger the opening movement of the second access part (42), so as to enable placing a recipient (10) in the recipient placement disposition (2).

The detection of the recipient (10) can trigger the movement of an engagement part of said recipient placement disposition (2), in particular from a first position to a position of retention of said recipient (10). The control means (6) can now trigger the start of the process of preparation and discharge of edible product to the recipient (10). After conclusion thereof, there can be automatically triggered the movement of the engagement part of the recipient placement disposition (2), from the position of retention to a position of releasing of said recipient (10).

After a previously defined period of time without being detected any input gesture associated with at least one of said access parts (41, 42), there can be automatically triggered the closing movement of said second access part (42).

The counting of this period of time can be discontinued in the case of an input gesture, such as for example the approaching of a portion of edible substance from the first access part (41), or the placement of a recipient (10) on the recipient placement disposition (2).

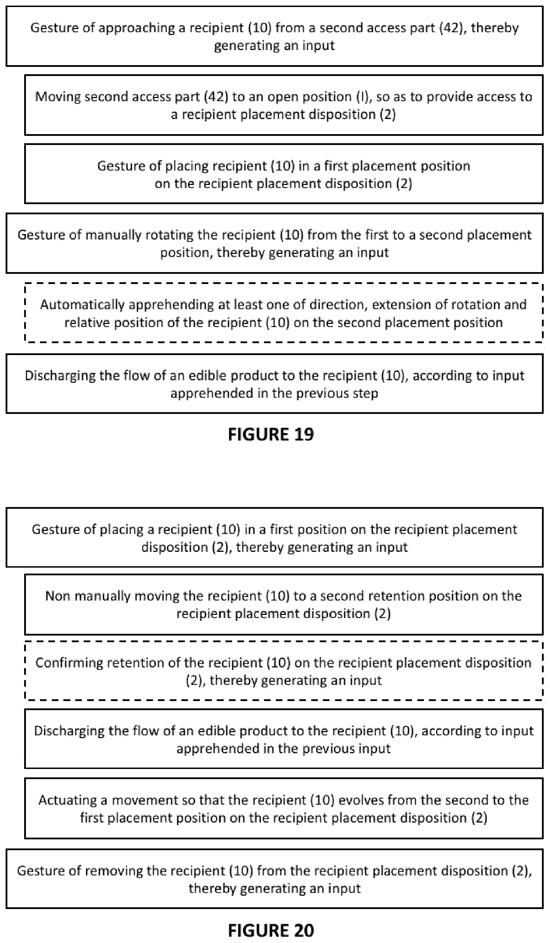

**Figures 19** and **20** represent other embodiments of the process according to the present invention, whereby it is not necessary that a user touches in any actuation means of the apparatus (1), whereby the usual use gestures provide the inputs for the preparation and discharge of edible product.

The gesture of approaching a recipient (10) from a second access part (42) can be apprehended by respective input means (92) and thereby generating an input for the actuation of automatic opening of said second access part (42). The gesture of placing the recipient in the recipient placement disposition (2), preferentially including a particular gesture, such as for example of rotation of the recipient (10), can also generate input for starting the circulation of flow for preparation of edible product.

In a preferred embodiment, the recipient (10) can be rotated between a first and a second placement position, whereby at least one of rotation direction and rotation extension can generate a respective input.

As represented in Figure 20, the apparatus (1) can include input means (9) adapted so that can detect the placement of a recipient (10), preferentially also detect the type of recipient (10, 10'), in a first position of placement thereof in the recipient placement disposition (2), and thereby automatically actuate a movement so that the recipient (10) evolves into a retention position.

The input means (9) associated with the recipient placement disposition (2) can further apprehend at least one of: data associated with said recipient (10, 10'), for example in the form of a code, and discharging the edible product according to the thereby apprehended input.

The steps can be repeated in reverse manner, whereby the whole process can unfold in automatic manner after the initial placement of a recipient (10) and until a detection of removal thereof from said recipient placement disposition (2).

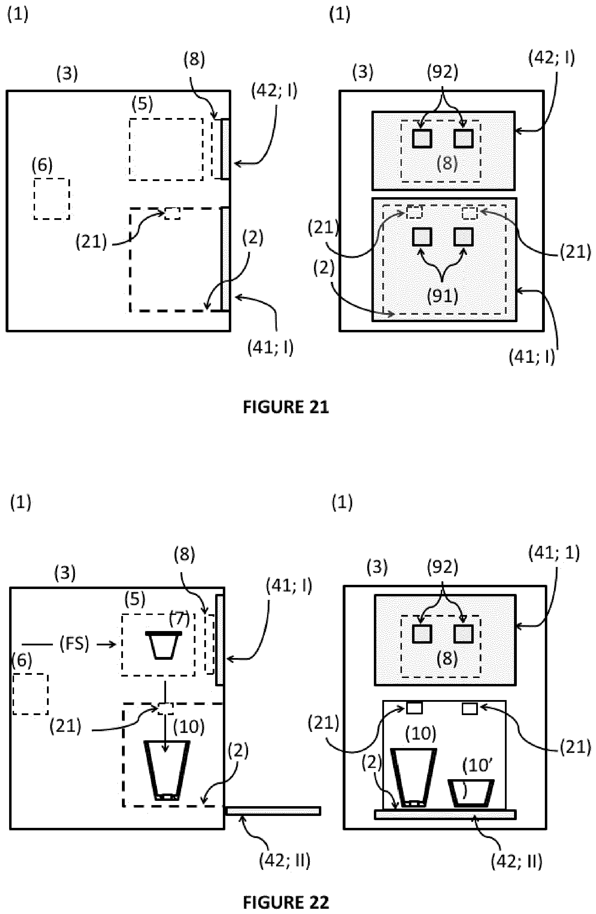

**Figures 21** and **22** represent a second type of system according to the present invention.

The apparatus (1) in this case presents an access disposition (4; 41, 42) that can be moved between closed (I) and open position (II), and respective recipient placement disposition (2) and entry passageway (8) of portions, provided on a frontal part of the apparatus (1). Alternatively, said access disposition (4; 41, 42) could present only said first and second access parts (41, 42).

Moreover, in this case the product discharge (21) is disposed above a location where a recipient (10, 10') can be operatively placed so that can collect the edible product.

It is preferred when the access disposition (4), in case of being in a closed position (II) as represented in Figure 21, at least approximately configures a regular geometry together with the envelope (3) of apparatus, for example a cube, and thereby providing an envelope devoid of projections or cavities.

## Claims

1. Process for preparing edible products, for example a beverage, based upon portions (7) of edible substance, and including a cycle of preparation of an edible product comprising the following steps:
- supplying, manually or automatically, a portion (7) of edible substance to a product preparation device (5), in particular by portion supply means, such as for example by an entry passageway (8) of portions, and
- placing, manually or automatically, a recipient (10, 10') on a recipient placement disposition (2) so that can collect edible product from a product discharge (21);
the cycle of preparation of edible product being **characterized in that** further includes at least two of the following steps:
- initiating the movement of at least part of an access disposition (4; 41, 42) to an open position (II);
- initiating the movement of at least part of an access disposition (4; 41, 42) to a closed position (I);
- initiating the supply of a portion (7) of edible substance to a product preparation device (5);
- initiating the circulating of fluid for preparing edible product until reaching said portion (7) of edible substance;
whereby at least part of said initiating steps can be triggered by an input gesture carried out in an input space (E, E') that extends in the proximal surrounding of the apparatus (1), so that said cycle of preparation of edible product does not mandatorily require a touch gesture by the user in any part of the apparatus (1).

2. Process according to claim 1, **characterized**
**in that** at least part of said initiating steps, and preferentially also remaining steps of a cycle of preparation of edible product, can be automatically triggered after and according to at least one of:
- apprehension of at least one of: a dimensional characteristic, a material characteristic, a conveyed characteristic, a spatial handling characteristics, and an event associated with at least one of: the portion (7) of edible substance and the recipient (10, 10'), including with relation to said input space (E),
- counting a period of time, for example one previously defined, with or without apprehension of any characteristic, dimension or event until ending the counting of said period of time,
so that the cycle of preparation of edible product does not mandatorily require more than two, preferentially more than one input gesture by the user without touching on the apparatus (1).

3. Process according to claims 1 or 2, **characterized**
**in that** the start of at least part of said initiating steps, and preferentially also further steps, of a cycle of preparation of edible product, can be triggered by the following steps:
- carrying out an input gesture in the proximal surrounding of the apparatus (1);
- apprehending the input gesture by at least part of the input means (9; 91, 92, 93, 94);
- generating an input based upon the apprehended input gesture and providing said input, preferentially in operative connection with control means (6),
so that there is triggered a respective step of the cycle of preparation of edible product by the apparatus (1), after and according to the input generated by the input means (9).

4. Process according to claims 1 to 3, **characterized in that** the input gesture includes at least one of the following types of touchless gestures:
- a free hand gesture in the proximal surrounding of at least part of the envelope (3) of apparatus, preferentially of at least part of the access disposition (4; 41, 42);
- a gesture of approaching at least one of: portion (7) of edible substance and recipient (10, 10'), from the proximal surrounding of the apparatus (1), for example at least during a previously defined period of time, preferentially at least from the proximal surrounding of at least part of the access disposition (4; 41, 42);
- a gesture of handling a portion (7) at least in the proximity of the entry passageway (8) of portions, for example with a previously defined orientation relative hereto;
- a gesture of placing a portion (7) of edible substance in the proximity, in particular so that can pass through the entry passageway (8) of portions;
- a gesture of placing a recipient (10) on the recipient placement disposition (2);
- a gesture of handling the recipient (10) at least in the proximity of, and for example with a previously defined orientation of a portion thereof relative to, the recipient placement disposition (2) of the apparatus (1).

5. Process according to any of claims 1 to 4, **characterized in that** the touchless input gesture includes at least one of:
- a gesture along at least one of: a single direction and a single plane;
- a gesture along at least one of: at least one of a first and second direction, and at least one of a first and second planes,
preferentially previously defined and carried out in a previously region in the proximal surrounding, preferentially proximal to at least one of the top and frontal regions, of the apparatus (1) and that is on sight at least from the input means (9; 91, 92, 93, 94).

6. Process according to any of claims 1 to 5, **characterized in that** the touchless input gesture triggers at least one of the following steps:
- transition of the apparatus (1) from a standby condition to an operative readiness condition;
- automatic verification of the readiness of fluid of preparation of edible product and operational condition of operative device of the apparatus (1);
- opening movement of at least part of the access disposition (4; 41, 42), thereby providing access to at least one of: recipient placement disposition (2) and entry passageway (8) of portions;
- opening movement of the product preparation device (5); preferentially at least two of the steps above, automatically.

7. Process according to any of the claims 1 to 6, **characterized in that** the cycle of preparation of edible product further includes at least one of the following steps:
- apprehension by the input means (9; 91, 92) of an input gesture by a hand holding a portion (7) of edible substance in a first input space (E) generated by the input means (9; 91, 92), whereby this first input space (E) is preferentially adapted so as to recognize at least one characteristic of the portion (7) of edible substance;
- apprehension by the input means (9) of an input gesture of a hand holding a recipient (10, 10') in a second input space (E') generated by the input means (9; 91, 92), whereby this second input space (E') is preferentially adapted so as to recognize at least one characteristic of the recipient (10, 10').

8. Process according to any of the claims 1 to 7, **characterized in that** the cycle of preparation of edible product further includes at least one, preferentially at least a plurality, of the following steps:
- placement of recipient (10, 10') in the recipient placement disposition (2);
- detection of presence of recipient (10, 10') in the recipient placement disposition (2);
- apprehension of a characteristic associated with the recipient (10, 10') including at least one of:
characteristic dimension and indicia of code;
- retention movement so as to retain the recipient (10) in the recipient placement disposition (2);
- handling of the recipient (10, 10') so as to evolve, for example by means of a rotation movement, from a first to a second placement position in the recipient placement disposition (2);
- confirmation that the recipient (10) is retained in the recipient placement disposition (2);
- detection of the supply of portion (7) of edible substance to the product preparation device (5) in at least one of: passage through of the entry passageway (8) of portions, upstream and downstream of the product preparation device (5) ;
- detection of the presence of portion (7) of edible substance in at least one of: in the proximity of the entry passageway (8) of portions, inside of the product preparation device (5);
- apprehension of data associated to the portion (7) of edible substance and supply of respective data to control means (6);
whereby at least one of the aforementioned steps is automatically followed by at least one of:
- automatic selection of parameters of preparation of edible product, based upon apprehended data;
- closing movement of at least part of the access disposition (4; 41, 42);
- start of the fluid circulation for preparation of edible product and discharge thereof to the recipient (10, 10').

9. Process according to any of the claims 1 to 8, **characterized In that** the opening movement of the access disposition (42) associated with the entry passageway (8) of portions is initiated after at least one of the following events:
- detection of the presence of recipient (10, 10') in the recipient placement disposition (2);
- confirmation that the recipient (10) is in a retention position on the recipient placement disposition (2).

10. Process according to any of the claims 1 to 9, **characterized**
**in that** the inputs associated with each one of the parts (41, 42) of the access disposition (4) trigger steps, including opening movements, driven non manually, for example by electromechanical means, associated with a respective access part (41, 42), autonomously from the other access part (41, 42) .

11. System for preparing edible products, for example beverages, based upon the circulation of fluid through a portion (7) of edible substance, said system comprising:
- an apparatus (1) presenting a recipient placement disposition (2) adapted so that can provide operative placement of at least one type of recipient (10, 10') so that can receive edible product from a product discharge (21), in particular a product discharge (21) provided so that the edible product can be discharged along a direction opposite to the gravity force, an envelope (3) of apparatus, and entry passageway (8) of portion adapted so that can supply said portion (7) of edible substance to a product preparation device (5) that is provided in flow connection upstream of the product discharge (21), control means (6) adapted so that can control at least the fluid circulation, input means (9; 91, 92, 93, 94),
**characterized**
**in that** the apparatus (1) presents at least one access disposition (4; 41, 42) adapted so that can be moved and thereby provide access to at least one of: the entry passageway (8) of portion and the product discharge (21), and in that the apparatus (1) is adapted so that can carry out at least the following operations:
- driving at least part of the access disposition (4; 41, 42), preferentially also the recipient placement disposition (2),
- initiating the supply of a portion (7) of edible substance to a product preparation device (5) by portion supply means, such as for example entry passageway (8) of portions,
- initiating the circulation of fluid and discharge of edible product to the recipient (10, 10'),
whereby at least one of said operations, preferentially all the operations in a cycle of preparation of edible product, can be carried out based upon the apprehension of an input gesture made without contact, in an input space (E) that extends in the proximal surrounding of the apparatus (1).

12. System according to claim 11, **characterized in that** the apparatus (1) is adapted so that at least part of said access disposition (4; 41, 42), and preferentially further at least one of: the recipient placement disposition (2) and control means (6), can be actuated by at most at least one of:
- up to two different types of free hand input gesture without touching the apparatus (1), and
- up to four different types of input gesture associated with an object, for example at least one of portion (7) of edible substance and recipient (10, 10'), without contact with the apparatus (1).
in particular, in an input space (E) associated with the access disposition (4; 41, 42), for example in the orthogonal projection thereof, at least in at least one of the top and frontal regions of the apparatus (1).

13. System according to claims 11 or 12, **characterized in that** the input means (9; 91, 92) are adapted so that can discriminate at least one of, preferentially both of said types of touchless input gesture, including gesture by a free hand and gesture by a hand holding an object, and
**in that** the input means (9; 91, 92, 93, 94) are provided as at least one of:
- sensors of motion detection at least in a respective input space (E), including for example of the video-camera, emission-reception optoelectronic devices, or similar,
- sensors of image capture, including in the visible or infrared ranges, at least in a respective input space (E), whereby said input space (E) extends in the proximal surrounding (3), preferentially at least in the proximal surrounding of the access disposition (4; 41, 42),
whereby the input means (9; 91, 92, 93, 94) are preferentially further provided in operative connection with said control means (6).

14. System according to claims 11 to 13, **characterized in that** the input means (9; 91, 92) are adapted so that can distinguish at least two different types of touchless input gestures carried out by a hand in the proximal surrounding, in particular of a respective input space (E, E'), including at least one type of gesture from the list that includes gestures along a single direction, along at least a first and a second direction, in a single plane and at least in a first and second planes, with a first and a second configuration of the spatial path.

15. System according to any of claims 11 to 14, **characterized in that** the input means (9; 91, 92, 93, 94) are adapted so that can discriminate at least two positions of at least one of:
- at least one of two different positions of a recipient (10) on the recipient placement disposition (2), and
- at least one of two different positions of a portion (7) of edible substance with relation to the entry passageway (8) of portions.

16. System according to any of claims 11 to 15, **characterized in that** the input means (9) are adapted so that can generate an input that triggers actuation of non-manual movement of the recipient placement disposition (2) in case of apprehension of at least one gesture of:
- oncoming of a recipient (10) in a proximal surrounding, preferentially at least of the access disposition (4; 41, 42), and
- placement of a recipient (10) on the recipient placement disposition (2), preferentially in a previously defined position of at least one portion of the recipient (10).

17. System according to any of claims 11 to 16, **characterized in that** at least part of the input means (9; 91, 92) are associated to at least one exterior input location, preferentially to a plurality of exterior input locations of the apparatus envelope (3), and are directed in an orientation along at least part of the proximal surrounding at sight, and are adapted so that can in isolation or jointly apprehend remote interactions, in particular at least one of: presence, duration of presence, trajectory, relative distance, in at least part of the proximal surrounding, in particular in a respective input space (E, E'), preferentially including associated with at least one of the top and frontal regions of the apparatus (1), preferentially associated with the access disposition (4).

18. System according to any of claims 11 to 17, **characterized in that** the input means (9; 91, 92, 93, 94) are adapted so that can distinguish between at least one of: proximity and placement of a portion (7) of edible substance and of a recipient (10, 10') with relation to a portion of the apparatus (1), preferentially including to the access disposition (4; 41, 42), being preferentially further adapted so that can generate input relative to at least one of: a respective first initial position and a second position, and **in that** the input means (9) are adapted so that can automatically detect at least one of:
- proximity of a recipient (10, 10') relative to the access disposition (4) and/or to the recipient placement disposition (2);
- placement of a recipient (10, 10') on the recipient placement disposition (2).

19. System according to any of claims 11 to 18, **characterized in that** the input means (9) are operatively associated with at least one of:
- a recipient placement disposition (2) adapted so that can carry out a movement from an initial position (I),
- an access disposition (4; 41, 42) adapted so that can carry out a movement from a closed position (I);
- a portion of the apparatus envelope (3) in the proximity of, preferentially a portion in the same face of the apparatus (1) as at least one of: recipient placement disposition (2) and access disposition (4; 41, 42);
- control means (6) adapted so that can control operation of the apparatus (1), including based upon the apprehension of a code associated with the portions (7) of edible substance.

20. System according to any of claims 11 to 19, **characterized in that** the input means (9; 91, 92) are adapted so that can apprehend an input gesture associated with at least one of: an optical interaction, for example image capture, an electromagnetic interaction, for example by infrared, a magnetic interaction, an interaction of capacitive type, preferentially by means of touch with a force not greater than the weight of the interacting object, for example a finger, occurring in at least one of: proximal surrounding, in particular input space (E), and envelope (3), in particular input surface, associated with the apparatus (1), in particular with the access disposition (4).

21. System according to any of claims 11 to 20, **characterized in that** at least part of the recipient placement disposition (2) is adapted so that can be moved in non-manual manner, for example by electromechanical means, including at least one of:
- at least from the respective closed position (I) to an open position (II), preferentially also vice-versa,
- from an initial placement position (I) of recipient to a retention position (II) of recipient, and preferentially also vice-versa,
whereby at least one of said movements is triggered by and according to an input apprehended by said input means (9; 91, 92, 93, 94) .

22. System according to any of claims 11 to 21, **characterized in that** at least part of the access disposition (4; 41, 42) is adapted so can be moved non-manually, for example by electromechanical means, including at least one of:
- from the closed position (I) to an open position (II),
- from an open position (II) to the closed position (I), whereby at least one of said movements is triggered by and according to an input apprehended by said input means (9; 91, 92) .

23. System according to any of claims 11 to 22, **characterized in that** the apparatus (1) is adapted so that at least part of the access disposition (4; 41, 42), preferentially also said recipient placement disposition (2), can further be automatically actuated based upon at least one of:
- detection of the presence of an object on the apparatus (1), for example of the recipient (10) on the recipient placement disposition (2);
- counting of a previously defined period of time without apprehension of inputs.

24. System according to any of claims 11 to 23, **characterized in that** at least one of: recipient placement disposition (2) and access disposition (4; 41, 42) presents actuation means adapted so that an input apprehended by said input means (9) only triggers the actuation of opening movement from said closed position (I), and so that the actuation of closing movement from an open position (II) can be triggered by at least one of:
- previously defined operation event of the apparatus (1), such as for example detection of the presence of at least one of: portion (7) of edible substance and recipient (10, 10) in operative condition in the apparatus (1), or other indication of a respective operative condition,
- automatic count of previously defined period of time after a previously defined operation event of the apparatus (1), in particular a period of time without apprehension of other input by the input means (9).
